(19) Europäisches Patentamt / European Patent Office / Office européen des brevets

(11) EP 2 326 704 B1

(12) **EUROPEAN PATENT SPECIFICATION**

(45) Date of publication and mention of the grant of the patent:
**22.08.2018  Bulletin 2018/34**

(21) Application number: **09815755.5**

(22) Date of filing: **18.09.2009**

(51) Int Cl.:
*C11D 1/79* *(2006.01)*    *C11D 1/66* *(2006.01)*
*A01N 27/00* *(2006.01)*    *C11D 3/39* *(2006.01)*
*C11D 3/36* *(2006.01)*    *C11D 17/00* *(2006.01)*
*C11D 17/06* *(2006.01)*

(86) International application number:
**PCT/IB2009/054112**

(87) International publication number:
**WO 2010/035199 (01.04.2010 Gazette 2010/13)**

(54) **GRANULAR CLEANING AND DISINFECTING COMPOSITION**

GRANULARE REINIGUNGS- UND DESINFEKTIONSZUSAMMENSETZUNG

COMPOSITION DÉSINFECTANTE ET DE NETTOYAGE GRANULAIRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **24.09.2008  US 236663**

(43) Date of publication of application:
**01.06.2011  Bulletin 2011/22**

(73) Proprietor: **Ecolab INC.**
**St. Paul, MN 55102 (US)**

(72) Inventors:
• **GERET, Laurence**
  **50259 Pulheim (DE)**
• **DECKER, Michael**
  **42697 Solingen (DE)**

(74) Representative: **Godemeyer Blum Lenze Patentanwälte Partnerschaft mbB - werkpatent An den Gärten 7 51491 Overath (DE)**

(56) References cited:
**EP-A1- 1 728 762**       **WO-A1-96/22355**
**DE-A1- 4 316 481**       **US-A- 4 259 200**
**US-A- 4 931 063**        **US-A- 5 691 296**
**US-A- 5 705 466**        **US-A1- 2005 153 854**
**US-A1- 2006 122 089**    **US-A1- 2007 054 828**
**US-A1- 2007 203 047**

Remarks:
The file contains technical information submitted after the application was filed and not included in this specification

**Description**

The present invention relates to a granular cleaning and disinfecting composition generating a peroxy acid containing use solution upon dissolution in water as well as a method for cleaning and/or disinfecting with a low-foaming peroxy acid containing use solution obtained upon dissolution of the granular composition in water.

Disinfectants play an important role in an increasing number of industries, and numerous chemical disinfectants have been proposed over the years. Preparations based on aldehydes have most widely been employed as chemical disinfectants in various fields. Most of these aldehyde-based compositions, however, possess severe disadvantages. Many aldehydes are volatile sensitisers and are irritant to the skin, eyes, and respiratory tract. A further drawback of aldehyde-based compositions is that they cannot be used for disinfecting objects soiled with organic material since aldehydes tend to denature and coagulate protein material, fixing it on the object to be cleaned, which results in biofilm formation on the object to be disinfected.

Organic peroxy acids, on the other hand, have numerous advantageous properties for the use as disinfectants. In particular peracetic acid possesses a broad spectrum of biological activity including bactericidal, fungicidal, biocidal, and sporicidal activity over a wide temperature range and even at low temperatures. Furthermore, peracetic acid is not deactivated by catalase and peroxidase, the enzymes breaking down hydrogen peroxide. It does not coagulate and/or fix tissues to surfaces, and breaks down to food-safe and environmentally friendly residues (acetic acid, water and oxygen). In addition, it remains active over a wide pH-range and can also be employed in hard water conditions. Solutions of peracetic acid are most commonly prepared from hydrogen peroxide and acetic acid.

However, a general problem with many active chemical disinfectants, also peroxy acids, is the long-term stability of the disinfectant. In many cases the functional group being responsible for the activity of a molecule also renders the molecule inherently unstable. Even equilibrium systems of peracetic acid (PAA) are thermodynamically unstable decomposing into acetic acid, water and oxygen. Especially in concentrated solutions of peracetic acid decomposition may occur rapidly. Further disadvantages of concentrated solutions of peracetic acid are the strong offensive smell and the highly acidic pH which makes these solutions corrosive to surfaces and accounts for the special requirements in transport and storage.

To avoid these problems several systems have been developed to generate peroxy acids and, in particular, peracetic acid *in situ* from more stable precursors by reacting a suitable peroxide source with a peroxy acid precursor (activator). This has been realised, for example, by two-pack systems wherein the peroxide source and the activator are provided in two separate containers and are mixed just prior to use.

More comfortable are "one-pack" solid compositions containing both a peroxide and an acylating agent (activator) which upon dissolution in water react to form the peroxy acid *in situ.* To achieve a good stability in storage it is important to use stable precursors which do not react or decompose in the solid composition. On the other hand, both precursors have to dissolve rapidly in water to achieve the desired disinfectant concentration in a short time. A further advantage of solid composition which generate the peroxy acid *in situ* is the fact that additional compounds may be comprised in the composition which would not be stable in concentrated acidic solutions.

DE 102 14 750 A1 describes a powdered composition comprising a peracetic acid generating system of a peroxide and an acylating agent in combination with non-ionic surfactants. This stable-in-storage solid composition allows the inclusion of otherwise non-bleach-stable surfactants which enhance the soil removal and thus allows both, cleaning and disinfection, to be achieved in one single step. CA 2569025 describes a powdered composition comprising percarbonate for disinfecting purposes. In both documents a high dissolution rate in water is achieved by using a finely powdered composition containing powdered perborate (either mono- or tetrahydrate) or percarbonate. A rapid and residue-free dissolution in water is a prerequisite for the use of a composition to avoid clogging of channels, tubes, and cannulas in narrow-lumened medical instruments such as endoscopes. For this purpose, it is also of importance that the use solution obtained from the solid composition is low-foaming to avoid insufficient cleaning in the narrow spaces. In addition, especially in manual cleaning and disinfecting processes, visual inspection of the progress of cleaning is desirable which would be hampered by a strong foam formation. If machine cleaning equipment is used for the cleaning and disinfecting process foaming of the solutions can cause an interruption of the process.

Even though sodium perborate, especially sodium perborate tetrahydrate, is widely used as a peroxide source, it may be converted into phytotoxic borone in the aquatic environment and has to be replaced due to environmental and health concerns.

As an alternative source of solid peroxide sodium percarbonate ($2Na_2CO_3 \times 3H_2O_2$) has been proposed. Although it has a respectable dissolution rate in water it is less widely used due to its lower storage stability, decomposing into sodium carbonate, water and oxygen. The reaction is catalysed by water, heat, and in the presence of organics and metal ions. Especially during bulk storage self-accelerating decompositions may occur. If percarbonate is used in powdered form high amounts of stabilizers are necessary which reduces the active oxygen content and further reduces the solubility of the compound. For this reason sodium percarbonate is commercially available commonly in a stabilised form, most commonly as a coated granulate. Several coatings have been proposed, for example water-insoluble coatings or sodium perborate, both of which are not suitable for the intended use in water-soluble, essentially borate-free cleaning and disinfecting compositions. In addition, most of the coated percarbonates commercially available cannot be used in granular cleaning and disinfecting compositions due to insufficient stability in storage, a slow dissolution rate in water, and/or stickiness of the coating which reduces the flowability and thus the ease of dosing in the cleaning and disinfecting composition.

In comparison to powdered compositions, granular compositions offer the possibility of achieving a high bulk density and a low amount of dust emission. A severe obstacle, however, is that many acylating agents such as, for example, tetraacetyl ethylendiamine (TAED) are sparely soluble in water. In powdered compositions an acceptable rate of dissolution is achieved by using finely divided TAED. However, in combination with a granular peroxide, the use of powdered TAED would result in segregation of the components during transport and storage.

A further problem associated with the use of percarbonates as a peroxide source is the gas formation (gasing) accompanying the peroxy acid generating reaction of the percarbonate and the acylating agent in water. This gasing is not observed when perborate is used as a peroxide. As a result foam formation is observed in the presence of surfactants, even if low-foaming surfactants are used, which is detrimental especially in cleaning and/or disinfecting narrow-lumened medical instruments such as endoscopes or if a visual inspection of the objects to be cleaned and/or disinfected is desired. On the other hand, especially in cleaning and disinfecting sensitive medical instruments in contact with blood and tissue, additional surfactants are necessary to ensure a thorough cleaning and disinfecting on a reasonable time scale. US5691296 A describes a process for making a granular detergent composition comprising the steps of adding to a detergent powder particles of percarbonate having a mean particle size in the range of from 250 to 900 micrometers and a powdery flow aid containing a partially hydrated crystalline sodium aluminosilicate having a moisture content of less than 15%.

Accordingly, it was an object of the present invention to provide a granular cleaning and disinfecting composition, which is both stable in storage and transport, comprising a percarbonate which rapidly and sediment-free dissolves in water generating a low-foaming peroxy acid containing use solution.

This object has been achieved by the compositions according to the present invention.

It has surprisingly been found, that the presence of phosphonates reduces the gas formation accompanying the peroxy acid generating reaction of percarbonate and an acylating agent in water. As a consequence, surfactants may be present in the inventive compositions obtained thereof without facing the problem of foam formation which is detrimental especially in cleaning and/or disinfecting narrow-lumened medical instruments such as endoscopes or if a visual inspection of the objects to be cleaned and/or disinfected is desired. As a major advantages readily soluble TAED-granulates coated with non-ionic surfactants may be used as a precursor for peracetic acid.

Phosphonates are well known as stabilisers for peroxides and peracetic acid solutions improving the stability in storage of these compounds. However, the impact of phosphonates on the foam formation or even only the gas evolution in the reaction of peroxides and acylating agents has never been described previously. More surprisingly, the presence of phosphonates in the solid composition reduces the foam formation, but on the other hand enhances the amount of peracetic acid formed in a use solution obtained by dissolving the solid composition in water.

The present invention provides granular cleaning and disinfecting compositions generating a peroxy acid containing use solution upon dissolution in water comprising:

(1) 15 - 60 wt% of a percarbonate,

(2) 8 - 35 wt% of an acylating agent,

(3) 0.5 - 5 wt% of a non-ionic surfactant,

(4) 0.1 - 3 wt% of a phosphonate as a foam inhibitor

having a bulk density between 0.5 and 1.4 kg/L,
characterized in that the composition comprises a mixture of at least two granulates, wherein one granulate comprises the percarbonate and the other granulate comprises the acylating agent,
wherein the granulate comprising percarbonate is coated with a water-soluble inorganic salt and the granulate comprising the acylating agent is coated with a water-soluble surfactant.

The compositions according to the present invention are free-flowable stable granulates, neither decomposing in storage nor segregating in transport, which have a high bulk density thus reducing the expenses for transport and storage and show essentially no dust emission. They dissolve rapidly (within 15 min) and sediment-free in water generating a low-foaming peroxy acid cleaning and/or disinfecting use solution.

In a preferred embodiment the composition according to the present invention comprises:

(1) 20 - 45 wt% of a percarbonate,

(2) 15 - 25 wt% of an acylating agent,

(3) 1 - 3 wt% a non-ionic surfactant,

(4) 0.5 - 2 wt% of a phosphonate.

The bulk density is defined as the ratio of the mass of a material to the total volume the material occupies. The bulk density was determined according to DIN ISO 697 and DIN 53466. Accordingly, a high bulk density reduces the costs for transport and storage. The composition according to the present invention has a bulk density preferably between 0.8 and 1.4 kg/L, more preferably between 0.9 and 1.2 kg/L and most preferred between 0.9 and 1.0 kg/L.

It is further preferred that the percarbonate is sodium percarbonate ($2Na_2CO_3.3H_2O_2$). The amount of percarbonate present in compositions according to the present invention preferably ranges from 15 to 60 wt%, more preferably from 20 to 45 wt%.

The peroxy acid generated is preferably selected from the group of $C_2$-$C_{10}$ alkyl peroxy acids, more preferably from the group of peracetic acid, perpropionic acid, peroctanoic acid, perdecanoic acid, or mixtures thereof. Most preferably the peroxy acid generated is peracetic acid.

As an acylating agent N-acyl or O-acyl donors may be used. In a preferred embodiment the acylating agent is selected from the group containing tetraacetyl glycoluril (TAGU), tetraacetyl ethylendiamine (TAED), diacetyl dioxohexahydratriazine (DADHT), and mixtures thereof. The amount of acylating agent present in compositions according to the present invention preferably ranges from 8 to 35 wt%, more preferably from 15 to 25 wt%.

As a non-ionic surfactant preferably at least one water-soluble non-ionic surfactant solid at 25 °C is used. In an even more preferred embodiment a water-soluble ethoxylated tallow fatty acid solid at 25 °C is used. The amount of the non-ionic surfactant comprised in the composition is preferably 0.5 to 5 wt%, more preferably 1 - 3 wt% and most preferably 2 wt%.

The phosponate is preferably selected from the group containing 1-hydroxyethane (1,1-diylbiphosphonic acid) (HEDP), nitrilotris(methylenephosphonic acid) (NTMP), diethylenetriaminepentakis(methylenephosphonic acid) (DTPMP), 1,2-diaminoethanetetrakis(methylenephosphonic acid) (EDTMP), their sodium, potassium or ammonium salts, or mixtures thereof. Most preferably the phosphonate is HEDP. The amount of phosphonate present in the composition according to the present invention preferably is 0.1 - 3 wt%, more preferably 0.5 - 2 wt%, and most preferably 1 wt%.

The composition comprises a mixture of at least two granulates, wherein one granulate comprises the percarbonate and the other granulate comprises the acylating agent.

The granulate comprising a percarbonate is coated with a water-soluble inorganic salt and the granulate comprising the acylating agent is coated with a water-soluble surfactant. Using a water-soluble surfactant as a coating for the granulate comprising the acylating agent, a high dissolution rate can be achieved. However, without the use of a phosphonate this would result in a disturbing foam formation when percarbonate is used as a peroxide.

The composition may contain one or more additional compounds selected from the group of alkalising agents such as sodium carbonate, buffer systems such a sodium bicarbonate or citric acid anhydrate, complexing agents, corrosion inhibitors such as benzotriazole, granulation auxiliaries, perfume, dyes, solutisers and further surfactants.

By using suitable buffer systems, it is possible to ensure a stable pH in the use solution obtained by dissolving a certain amount of the granular composition in water without the need for adjusting the pH of the use solution. Preferred embodiments include for example compositions, wherein the pH of a 2wt% use solution is pH 8 or pH 10, stable for at least 24 h, i.e. not deviating from the pH of the initial use solution for more than pH +/- 0.2.

The amount of sodium perborate comprised in the composition is less than 5.3 wt%, calculated for the theoretical "pure sodium perborate" ("$NaBO_4$"). Thus the amount of sodium perborate monohydrate is less than 6.5 wt% and the amount of sodium perborate tetrahydrate is less than 10 wt%, respectively. More preferably the amount of sodium perborate is less than 0.1 wt% and most preferably the composition is essentially perborate-free.

The compositions according the present invention are essentially dust-free, thus the amount of particles having a particle size smaller than 0.1 mm is less than 3 wt%. In a preferred embodiment the amount of particles having a particle size smaller than 0.2 mm is less than 15 wt% and more than 40 wt% of the particles have a particle size between 0.4 and 0.8 mm. The amount of particles having a particle size greater than 1.6 mm is preferably below 1 %.

The present invention further provides a method for cleaning and/or disinfecting objects with a low-foaming peroxy acid containing use solution comprising the steps of:

(1) Preparing a use solution by dissolving the composition of the present invention in water;

(2) Contacting the object to be cleaned and/or disinfected with the use solution obtained in step (1), preferably by immersing the object into the use solution or by applying (for example by spraying) the use solution onto the surface of the object, for a time sufficient to allow for a satisfactory cleaning and/or disinfection;

(3) Optionally rinsing the object.

This method can be used for cleaning and disinfecting medical, veterinary, live-stock, and food- and beverage-processing equipment and facilities, preferably for manually or automatically disinfecting medical instruments, most preferably endoscopes. The use solutions obtained from inventive composition are also suitable as a disinfecting agent in the field of fish-farming.

**Brief description of the drawings**

Fig. 1 shows the apparatus used to monitor the gas generation of the use solution comprising a flask containing the use solution connected to a gas pipe reaching into a water-filled graduated volumetric burette in which the gas generated is being collected and measured.

Fig. 2 shows the influence of the presence of phosphonate on gasing in peracetic acid-containing use solutions obtained from the compositions according to the present invention. The solid graph shows the volume of gas generated in a 2 wt% use solution containing phosphonate as a foam inhibitor (composition 2), while the dotted line represents the increase in volume due to gas formation in a 2 wt% use solution containing no phosphonate (composition 3).

Fig. 3 shows the amount of peracetic acid in ppm contained in a 2 wt% use solution over several hours.

**Examples**

Example 1: Preparation of Granular Compositions

Compositions 1, 2, and 3 were prepared by mixing the components listed in Table 1. Compositions 1 and 2 are specific embodiments of the present invention, while composition 3 is a reference composition containing essentially the same components as composition 2, except that no phosphonate was added. The missing phosphonate was balanced with sodium carbonate.

Table 1:

|  | **Composition 1** | **Composition 2** | **Composition 3 (reference composition)** |
|---|---|---|---|
| Coated sodium carbonate peroxyhydrate | 40 - 50 | 10 - 20 | 10 - 22 |
| Sodium tripolyphosphate | - | 40 - 50 | 40 - 50 |
| Solid non-ionic surfactant | 1-3 | 1- 3 | 1 - 3 |
| Sodium carbonate | 2 - 5 | 10 - 20 | 10 - 20 |
| Tetrasodium (1-hydroxyethylidene) biphosphonate | 0.5 - 2 | 0.5 - 2 | - |
| Corrosion inhibitor | 0.5 - 2 | 0.5 - 2 | 0.5 - 2 |
| Coated granular TAED | 20 - 25 | 12 - 18 | 12 - 18 |
| Liquid oxo alcohol EO-PO-adduct | 0.5-2 | - | - |
| Perfume | 0.01 - 0.2 | - | - |
| Sodium bicarbonate | 1 - 3 | - | - |
| Citric acid anhydrate | 12 - 18 | - | - |
| All amounts listed in Table 1 are given in wt% |  |  |  |

A 2 wt% use solution obtained from dissolving 20 g of composition 1 in 980 g of water had a pH 8, while the 2 wt% use solution obtained from dissolving 20 g of composition 2 in 980 g of water had a pH 9.9 - 10. The pH was stable for 24 h at room temperature.

Example 2: Particle size distribution

The particle size distribution of compositions 1 and 2 was determined by sieve analysis using an analytical sieving machine type LAVIB S+52 (Siebtechnik GmbH, Mülheim a. d. Ruhr). A set of five sieves with a mesh size of 1.6, 0.8, 0.4, 0.2, and 0.1 mm, respectively, was used. The sieves were arranged in descending mesh size. Exactly 100 g of the granular composition 1 or 2, respectively, were carefully loaded onto the uppermost sieve (mesh size 1.6 mm), then the set of sieves was closed and was vibrated for 120 seconds. Afterwards the residue amount held back on each sieves was rated. For each composition sieve analysis was carried out twice.

Table 2 gives the particle-size distribution of compositions 1 and 2 in weight percent as an average of two measurements.

Table 2:

| Sieve [mm] | Composition 1 residue [wt%] | Composition 2 residue [wt%] |
|---|---|---|
| 0 | 0.5 | 2.1 |
| 0.1 | 6.7 | 11.1 |
| 0.2 | 6.3 | 21.4 |
| 0.4 | 45 | 50.9 |
| 0.8 | 41.2 | 15.3 |
| 1.6 | 0.6 | 0.1 |

Example 3: Bulk density

The bulk density of compositions 1 and 2 respectively was determined according to DIN ISO 697 and DIN 53466. Composition 1 has a bulk density of 900 g/L, while the bulk density of composition 2 is 1000 g/L.

Example 4: Influence of the phosphonate on gas generation in the use solution

Use solutions containing 2 wt% of compositions 2 and 3 respectively were prepared by dissolving 20 g the composition in 980 g of deionised water with stirring at 500 rpm for 15 minutes. Both mixtures completely dissolved without sediment within 15 minutes. 500 g of each use solution was then filled into a volumetric flask which was closed with a gas pipe. The open end of the gas pipe was introduced into a water-filled graduated volumetric burette in which the gas generated was collected and measured at room temperature. Table 2 lists the average values obtained from two determinations carried out for each sample.

Gas generation from a granular composition with and without phosphonate (composition 2 and 3).

Table 3:

| t [min] | Composition 2 average volume [mL] | Composition 3 average volume [mL] |
|---|---|---|
| 20 | 0.1 | 0.2 |
| 60 | 1.0 | 2.0 |
| 180 | 5.2 | 13.2 |
| 300 | 12.1 | 30.1 |

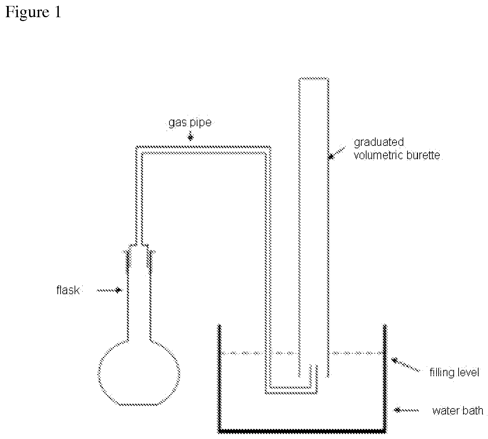

The apparatus used for determining the gas generation is depicted in Fig. 1.

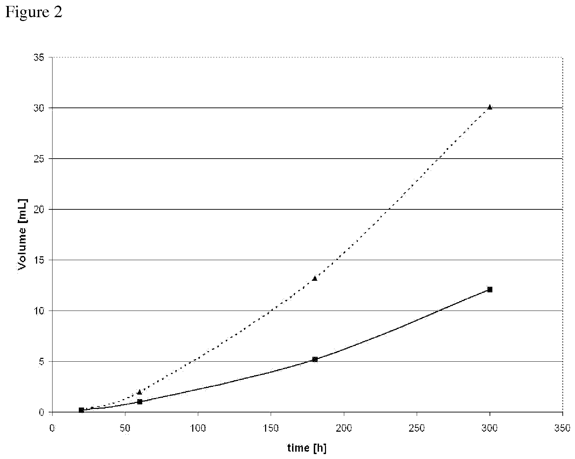

Figure 2 shows the gas generation of compositions 2 and 3 in dependency on time.

6

Example 5: Comparison of the amount of peracetic acid generated

To evaluate the amount of peracetic acid generated in the 2 wt% use solutions of the granular compositions 2 and 3, respectively, were prepared according to example 4 except that tap water was used instead of deionised water. After 15 minutes at room temperature (20 to 26°C) 25 g of the 2 wt% solution were added to a mixture of 100 g deionised water, 100 g ice made of deionised water, and 20 mL glacial acetic acid. A small spatula of potassium iodide was added and the solution was titrated under cool conditions with 0.1 N-sodiumthiosulfate solution until the colour changed from blackish-brown to yellow. 2 mL of a 1% starch solution in water was then added. As a result, the mixture turned dark again. Titration was being continued until the colour changed from black to colourless, and the endpoint was reached. The amount of peracetic acid in the use solution was then calculated according to the following formula:

$$\text{amount of PAA [ppm]} = A \times 38.0 \times f \times 4$$

wherein A represents the volume of the 0.1 N solution of sodium thiosulfate used in mL, and f represents the corrector factor for the 0.1 N solution of sodium thiosulfate.
The amount of peracetic acid generated in the use solution obtained from composition 2 was 1.615 ppm, whilst the use solution obtained from composition 3 (reference composition without phosphonate) was 1.258 ppm.

Example 6:

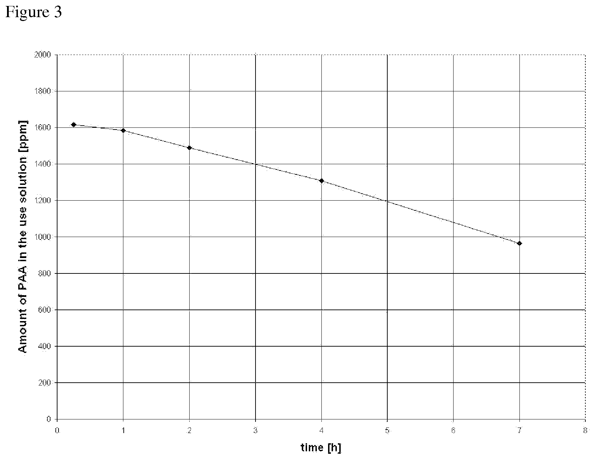

The amount of peracetic acid in a 2 wt% use solution of composition 2 was determined according to example 5 after 1, 2, 4, and 7 hours. As can be gathered from Figure 3 the maximum amount of peracetic acid is available only 15 minutes after dissolving the granular composition 2 in water. From that point on the amount of peracetic acid slowly but almost constantly decreases. After 24 hours 187 ppm peracetic acid are present in the remaining use solution. Since peracetic acid mainly decomposes to environmentally friendly acetic acid, water, and oxygen, no special waste treatment is required for excess use solution.

**Claims**

1. A granular cleaning and disinfectant composition, generating a peroxy acid containing use solution upon dissolution in water, comprising:

     (1) 15 - 60 wt% of a percarbonate,
     (2) 8 - 35 wt% of an acylating agent,
     (3) 0.5 - 5 wt% a non-ionic surfactant,
     (4) 0.1 - 3 wt% of a phosphonate as a foam inhibitor

   having a bulk density between 0.5 and 1.4 kg/L,
   **characterized in that** the composition comprises a mixture of at least two granulates, wherein one granulate comprises the percarbonate and the other granulate comprises the acylating agent,
   wherein the granulate comprising percarbonate is coated with a water-soluble inorganic salt and the granulate comprising the acylating agent is coated with a water-soluble surfactant.

2. A composition to according claim 1 **characterized in that** the composition comprises

     (1) 20 - 45 wt% of a percarbonate,
     (2) 15 - 25 wt% of an acylating agent,
     (3) 1 - 3 wt% a non-ionic surfactant,
     (4) 0.5 - 2 wt% of a phosphonate.

3. A composition according to any of claims 1 to 3 **characterized in that** the percarbonate is sodium percarbonate.

4. A composition according to any of claims 1 to 2 wherein the peroxy acid generated is peracetic acid.

5. A composition according to any of claims 1 to 4 **characterized in that** the acylating agent is selected from the group consisting of tetraacetyl glycoluril (TAGU), tetraacetyl ethylenediamine (TAED), diacetyl dioxohexahydratriazine (DADHT), and mixtures thereof.

6. A composition according to any of claims 1 to 5 **characterized in that** the phosphonate is selected from the group containing 1-hydroxyethane (1,1-diylbiphosphonic acid) (HEDP), nitrilotris(methylenephosphonic acid) (NTMP), diethylenetriaminepentakis(methylenephosphonic acid) (DTPMP), 1,2-diaminoethanetetrakis(methylenephosphonic acid) (EDTMP), their sodium, potassium or ammonium salts, or mixtures thereof.

7. A composition according to any of claims 1 to 6 **characterized in that** the composition contains one or more additional compounds selected from the group of alkalising agents, buffer systems, complexing agents, corrosion inhibitors, granulation auxiliaries, perfume, dyes, solutizers and further surfactants.

8. A composition according to any of claims 1 to 6 **characterized in that** the amount of sodium perborate comprised in the composition is less than 5.3 wt%.

9. A method for cleaning and/or disinfecting objects with a low-foaming peroxy acid containing use solution comprising the steps of:

(1) Preparing a use solution by dissolving the composition according to any of claims 1 to 8 in water;
(2) Contacting the object to be cleaned and/or disinfected with the use solution according to (1), preferably by immersing the object into the use solution or by applying the use solution onto the surface of the object, for a time sufficient to allow for a satisfactory cleaning and/or disinfection;
(3) Optionally rinsing the object.

10. A method according to claim 9 for cleaning and/or disinfecting medical, veterinary, live-stock and food- and beverage-processing equipment and facilities.


**Patentansprüche**

1. Granuläre Reinigungs- und Desinfektionszusammensetzung, die bei Auflösung in Wasser eine Peroxysäure enthaltende Gebrauchslösung erzeugt, umfassend:

(1) 15% bis 60 Gew.-% eines Percarbonats,
(2) 8% bis 35 Gew.-% eines Acylierungsmittels,
(3) 0,5% bis 5 Gew.-% eines nichtionischen Tensids,
(4) 0,1% bis 3 Gew.-% eines Phosphonats als ein Schauminhibitor mit einer Fülldichte zwischen 0,5 und 1,4 kg/l,

**dadurch gekennzeichnet, dass** die Zusammensetzung eine Mischung von mindestens zwei Granulaten umfasst, wobei eines der Granulate das Percarbonat aufweist und das andere Granulat das Acylierungsmittel aufweist, wobei das Percarbonat aufweisende Granulat mit einem wasserlöslichen anorganischen Salz beschichtet ist und das Acylierungsmittel aufweisende Granulat mit einem wasserlöslichen Tensid beschichtet ist.

2. Zusammensetzung nach Anspruch 1, **dadurch gekennzeichnet, dass** die Zusammensetzung umfasst:

(1) 20% bis 45 Gew.-% eines Percarbonats,
(2) 15% bis 25 Gew.-% eines Acylierungsmittels,
(3) 1% bis 3 Gew.-% eines nichtionischen Tensids,
(4) 0,5% bis 2 Gew.-% eines Phosphonats.

3. Zusammensetzung nach einem der Ansprüche 1 bis 3, **dadurch gekennzeichnet, dass** das Percarbonat Natriumpercarbonat ist.

4. Zusammensetzung nach einem der Ansprüche 1 bis 2, wobei das Peroxid, das erzeugt wird, Peressigsäure ist.

5. Zusammensetzung nach einem der Ansprüche 1 bis 4, **dadurch gekennzeichnet, dass** das Acylierungsmittel ausgewählt ist aus der Gruppe bestehend aus Tetraacetylglykoluril (TAGU), Tetraacetylethylendiamin (TAED), Diacetyldioxohexahydratriazin (DADHT) und Mischungen davon.



**6.** Zusammensetzung nach Anspruch 1 bis 5, **dadurch gekennzeichnet, dass** das Phosphonat ausgewählt ist aus der Gruppe, die 1-Hydroxyethan(1,1-diphosphonsäure) (HEDP), Nitrilotris(methylenphosphonsäure) (NTMP), Diethylentriaminpentakis(methylenphosphonsäure) (DTPMP), 1,2-Diaminoethantetrakis(methylenphosphonsäure) (EDTMP), deren Natrium-, Kalium- oder Ammoniumsalze oder Mischungen davon enthält.

**7.** Zusammensetzung nach Anspruch 1 bis 6, **dadurch gekennzeichnet, dass** die Zusammensetzung eine oder mehrere zusätzliche Verbindungen enthält, die ausgewählt sind aus der Gruppe von Alkalisierungsmitteln, Puffersystemen, Komplexbildnern, Korrosionsinhibitoren, Granulierhilfsmitteln, Parfüm, Farbstoffen, Lösungsvermittlern und weiteren Tensiden.

**8.** Zusammensetzung nach Anspruch 1 bis 6, **dadurch gekennzeichnet, dass** die Menge an Natriumperborat, die in der Zusammensetzung enthalten ist, weniger als 5,3 Gew.-% beträgt.

**9.** Verfahren zum Reinigen oder Desinfizieren von Gegenständen mit einer schwach schäumenden Peroxysäure enthaltenden Gebrauchslösung, umfassend die Schritte.

(1) Herstellen einer Gebrauchslösung durch Auflösen der Zusammensetzung nach einem der Ansprüche 1 bis 8 in Wasser;
(2) Inkontaktbringen des zu reinigenden oder zu desinfizierenden Gegenstands mit der Gebrauchslösung nach (1), bevorzugt durch Eintauchen des Gegenstands in die Gebrauchslösung oder durch Auftragen der Gebrauchslösung auf die Oberfläche des Gegenstandes für eine Zeitdauer, die ausreichend ist, um eine zufriedenstellende Reinigung oder Desinfektion zu ermöglichen;
(3) wahlweise Spülen des Gegenstands.

**10.** Verfahren nach Anspruch 9 zum Einigen oder Desinfizieren von medizinischen, veterinärmedizinischen, Viehbestands- oder Nahrungsmittel- und Getränkeverarbeitungsanlagen und -Einrichtungen.

**Revendications**

**1.** Composition désinfectante et de nettoyage granulaire, générant un acide peroxy contenant une solution de traitement après dissolution dans l'eau, comprenant :

(1) entre 15 et 60 % en poids d'un percarbonate,
(2) entre 8 et 35 % en poids d'un agent d'acétylation,
(3) entre 0,5 et 5 % en poids d'un agent tensioactif non ionique,
(4) entre 0,1 et 3 % d'un phosphonate en tant qu'inhibiteur de mousse

ayant une densité apparente comprise entre 0,5 et 1,4 kg/L,
**caractérisée en ce que** la composition comprend un mélange d'au moins deux granulats, un granulat comprenant le percarbonate et l'autre granulat comprenant l'agent d'acétylation,
dans laquelle le granulat comprenant le percarbonate est revêtu d'un sel inorganique hydrosoluble et le granulat comprenant l'agent d'acétylation est revêtu d'un agent tensioactif hydrosoluble.

**2.** Composition selon la revendication 1, **caractérisée en ce que** la composition comprend

(1) entre 20 et 45 % en poids d'un percarbonate,
(2) entre 15 et 25 % en poids d'un agent d'acétylation,
(3) entre 1 et 3 % en poids d'un agent tensioactif non ionique,
(4) entre 0,5 et 2 % en poids d'un phosphonate,

**3.** Composition selon l'une quelconque des revendications 1 à 3, **caractérisée en ce que** le percarbonate est le percarbonate de sodium.

**4.** Composition selon l'une quelconque des revendications 1 ou 2, dans laquelle l'acide peroxy généré est l'acide peracétique.

**5.** Composition selon l'une quelconque des revendications 1 à 4, **caractérisée en ce que** l'agent d'acétylation est choisi parmi le groupe constitué du tétraacétylglycolurile (TAGU), de la tétraacétyléthylènediamine (TAED), de la diacétyldioxohexahydratriazine (DADHT) et des mélanges de ceux-ci.

6. Composition selon l'une quelconque des revendications 1 à 5, **caractérisée en ce que** le phosphonate est choisi parmi le groupe contenant l'acide 1-hydroxyéthane-1,1-diylbiphosphonique (HEDP), l'acide nitrilotrisméthylène phosphonique (NTMP), l'acide diéthylènetriaminepentakisméthylène phosphonique (DTPMP), l'acide 1,2-diéthylèneaminepentakisméthylène phosphonique (EDTMP), leurs sels de sodium, de potassium ou d'ammonium, ou des mélanges de ceux-ci.

7. Composition selon l'une quelconque des revendications 1 à 6, **caractérisée en ce que** la composition contient un ou plusieurs composés supplémentaires choisis parmi le groupe constitué des agents d'alcalisation, des systèmes tampon, des agents complexants, des inhibiteurs de corrosion, des auxiliaires de granulation, un parfum, des colorants, des agents solubilisant et d'autres agents tensioactifs.

8. Composition selon l'une quelconque des revendications 1 à 6, **caractérisée en ce que** la quantité de perborate de sodium contenue dans la solution est inférieure à 5,3 % en poids.

9. Procédé de nettoyage et/ou désinfection d'objets à l'aide d'un acide peroxy à faible moussage contenant une solution de traitement comprenant les étapes de :

(1) Préparation d'une solution de traitement par dissolution de la composition selon l'une quelconque des revendications 1 à 8 dans l'eau ;
(2) Mise en contact de l'objet à nettoyer et/ou désinfecter avec la solution de traitement conformément à (1), de préférence par immersion de l'objet dans la solution de traitement ou par application de la solution de traitement sur la surface de l'objet, pendant une période de temps suffisante pour permettre d'obtenir un nettoyage satisfaisant et/ou une désinfection satisfaisante ;
(3) Rinçage éventuel de l'objet.

10. Procédé selon la revendication 9 permettant de nettoyer et/ou désinfecter des équipements et installations médicaux, vétérinaires, destinés à la transformation du bétail et des aliments et des boissons.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10214750 A1
- CA 2569025

- US 5691296 A